# EUROPEAN PATENT APPLICATION

(11) **EP 4 807 474 A1**
(43) Date of publication of application: **16.09.2026**
(21) Application number: 25163808.6
(22) Date of filing: 14.03.2025
(51) Int. Cl.: G05B 19/418, G05B 17/02

(54) **METHOD FOR GENERATING DIGITAL TWINS OF INDUSTRIAL SITES**

(71) Applicant: Siemens Aktiengesellschaft, 80333 München (DE)
(72) Inventor: Singh, Saurabh Narayan, 81739 München (DE)
(74) Representative: Siemens Patent Attorneys

(57) **Abstract**

The present disclosure provides a method for creating a digital twin of an industrial site with components having attributed digital twins and at least one component without a presently attributed digital twin. For the component without an attributed digital twin, a generative Al model suggests a spatial design based on a shape measurement of the component. A data functionality of the component without an attributed digital twin is generated by the generative Al based on a data functionality of the components with attributed digital twins. The method is computer-implemented and utilizes a digital twin as a digital spatial and data functional representation of the component or site. The generative Al model is a generative large digital twin model (LDTM).

## Description

The invention relates to digital twin generation for industrial environments, and more particularly to a method for automatically creating digital twins of brownfield factories with legacy equipment in an industrial metaverse.

Digital twins have become increasingly important in modern industrial environments. These virtual representations of physical assets, processes, or systems allow for real-time monitoring, simulation, and optimization. In the context of factories, digital twins can provide valuable insights into operations, maintenance needs, and potential improvements.

The industrial metaverse is an emerging concept that combines digital twin technology with immersive virtual environments. This integration allows for enhanced visualization, collaboration, and interaction with industrial systems and data. As factories adopt these technologies, they can potentially improve efficiency, reduce downtime, and make more informed decisions.

However, implementing digital twins and integrating them into an industrial metaverse presents challenges, particularly for brownfield factories with legacy equipment. Many older machines lack digital representations.

Furthermore, the process of manually creating digital twins for legacy equipment can be time-consuming and resource-intensive. It often requires extensive measurements, 3D modeling, and programming to replicate the physical and functional characteristics of each machine accurately.

Another obstacle is the integration of disparate systems within a factory. Older equipment may use proprietary protocols or outdated communication standards, complicating efforts to create a cohesive digital representation of the entire production line or facility.

Additionally, the lack of standardization in digital twin creation and implementation can lead to compatibility issues when attempting to incorporate multiple machines or systems into a unified industrial metaverse environment.

It has been appreciated that a method is needed that overcomes one or more of these problems.

It is therefore the object of the present invention to provide a method for creating digital twins of industrial sites, particularly for an industrial metaverse, that overcomes one or more of these problems.

This object of the present invention is solved with a method for creating a digital twin of an industrial site with components with attributed digital twins and at least one component without a presently attributed digital twin with the features contained in claim 1.

Advantageous aspects of the invention are contained in the subsequent dependent claims, the following description and the drawing.

The invention provides a method for creating a digital twin of an industrial site with components with attributed digital twins and at least one component without a presently attributed digital twin. The method comprises: using a generative Al model to suggest a spatial design of the component without attributed digital twin based on a shape measurement of the component and generating a data functionality of the at least one component without attributed digital twin by the generative Al based on a data functionality of the components with attributed digital twins.

This method enables the automated creation of digital twins for legacy components in brownfield factories, significantly reducing the manual effort required for digitalization and facilitating the onboarding of factories into industrial metaverse applications.

A digital twin of a component or site in the meaning of the present application is a digital spatial and data functional representation of the physical component or site. These digital representations are valuable for monitoring, analyzing, and optimizing industrial processes. However, creating digital twins for older equipment or entire brownfield factories can be a complex and time-consuming process when done manually.

In a further advantageous and optional aspect of the invention, the method is computer-implemented. This aspect allows an efficient and automated approach to crafting digital twins for entire industrial sites.

In another advantageous and optional aspect of the method according to the invention, a digital twin of a component or site is a digital spatial and data functional representation of the component or site, respectively.

This comprehensive representation ensures that both the physical characteristics and operational behaviors of components are accurately modeled, providing a more complete and useful digital twin for industrial applications.

In another advantageous and optional aspect of the method according to the invention, a data functionality of the at least one component without an attributed digital twin is generated based additionally on the suggested spatial design of the component.

By incorporating the suggested spatial design into the generation of data functionality, the method creates a more coherent and accurate digital twin, improving the overall fidelity of the industrial site model.

In another advantageous and optional aspect of the method according to the invention, a component comprises at least one device, particularly a manufacturing machine and/or logistic machine.

This aspect allows the method to be applied to a wide range of industrial equipment, making it versatile and applicable across various manufacturing and logistics scenarios.

In another advantageous and optional aspect of the method according to the invention, a component comprises an arrangement of devices, particularly manufacturing machines and/or logistic machines.

By accommodating complex arrangements of devices, the method can create digital twins for entire production lines or interconnected systems, providing a more comprehensive view of the industrial site.

In another advantageous and optional aspect of the method according to the invention, the generative Al model is a generative large digital twin model.

Utilizing a generative large digital twin model enhances the Al's ability to understand and replicate complex industrial systems, leading to more accurate and contextually appropriate digital twin suggestions.

In another advantageous and optional aspect of the method according to the invention, the digital twin includes data interfaces, particularly corresponding to the data functionality.

The inclusion of data interfaces ensures that the generated digital twins can seamlessly integrate with existing systems and communicate effectively within the industrial metaverse environment.

In another advantageous and optional aspect of the method according to the invention, the industrial site is modelled with a knowledge graph, in which components with attributed digital twins are represented by nodes and data functionalities of the attributed digital twins are represented by edges.

This knowledge graph representation provides a structured and intuitive way to model the relationships and interactions between components, facilitating better understanding and analysis of the industrial site.

In another advantageous and optional aspect of the method according to the invention, the digital twin of the industrial site is presented to a user for verification.

User verification ensures the accuracy and relevance of the generated digital twins, allowing for human expertise to validate and refine the Al-generated models.

In another advantageous and optional aspect of the method according to the invention, the digital twins without a presently attributed digital twin can be indicated by a user.

This user-driven identification of components lacking digital twins allows for targeted application of the method, ensuring that all critical components are properly digitalized.

In another advantageous and optional aspect of the method according to the invention, the created digital twin is included into a knowledge base.

By incorporating newly created digital twins into the knowledge base, the method continuously improves its capabilities, leading to more accurate and diverse digital twin suggestions over time.

In a further aspect of the invention, a method for creating a digital twin of an industrial site with components is provided. This method according to the invention comprises: comparing a shape measurement of one or more components to a knowledge base of attributions of digital twins of components to shapes of components, attributing digital twins for components with matching shape measurements, not attributing digital twins for one or more components without matching shape measurement, and creating the digital twin of the industrial site with a method according to one of the previous claims.

This comprehensive approach combines shape-based attribution with the generative Al method, providing a robust solution for creating digital twins of industrial sites with both known and unknown components.

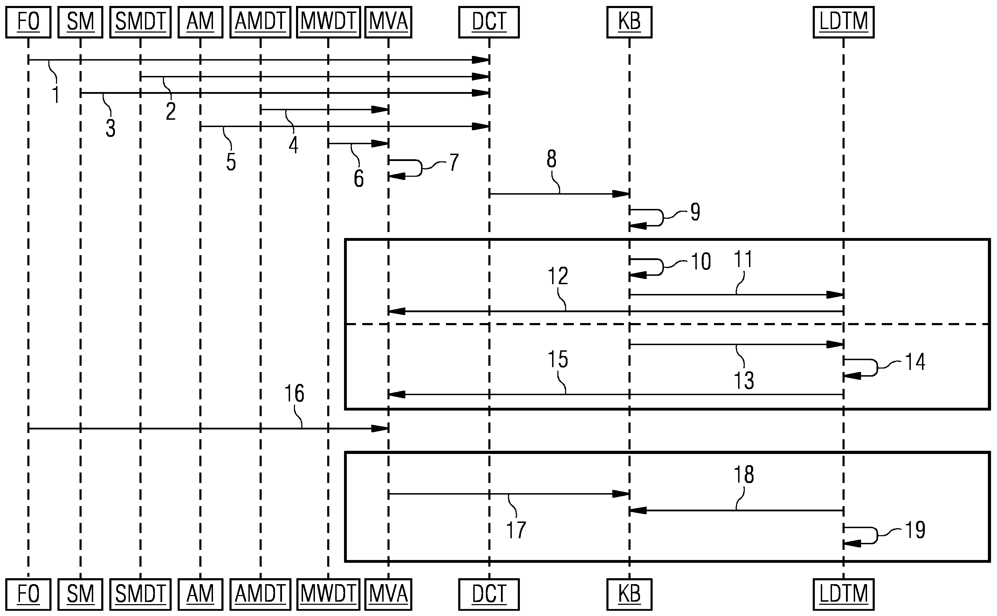

In the following, the invention will be described in more details with the help of the attached drawings, in which
- FIG. 1: illustrates a sequence diagram for creating and integrating digital twins for industrial systems, according to embodiments of the present invention.

Common reference numerals are used throughout the figures to indicate similar features.

The present invention shown in Fig. 1 relates to a method for creating digital twins of industrial sites, in the depicted embodiment represented by brownfield factories with a mix of modern and legacy equipment. Industrial sites often contain components with existing digital twins as well as components lacking digital representations like in the depicted use case.

A digital twin of a component or site in the meaning of the present application is a digital spatial and data functional representation of the physical component or site. These digital representations are valuable for monitoring, analyzing, and optimizing industrial processes. However, creating digital twins for older equipment or entire brownfield factories can be a complex and time-consuming process when done manually.

The method described herein addresses the challenge of efficiently creating digital twins for industrial sites that include both components with attributed digital twins and components without presently attributed digital twins. This computer-implemented method aims to automate the process of those components without a digital twin, thus generating digital representations for legacy equipment, reducing the manual effort.

In the context of this method, a component may comprise at least one device, such as a manufacturing machine or a logistic machine. Additionally, a component may encompass an arrangement of devices, which could include multiple manufacturing machines, logistic machines, or a combination thereof. This flexibility allows the method to be applied to various scales within an industrial site, from individual machines to entire production lines or facility sections.

By providing a systematic approach to creating digital twins for brownfield factories, this method enables more comprehensive digital representations of industrial sites. This, in turn, facilitates improved monitoring, analysis, and optimization of industrial processes, even in facilities with a mix of modern and legacy equipment. The system for creating digital twins of industrial sites comprises several key components that work together to automate the process of generating digital representations for legacy equipment and integrating them with existing digital twins:
A Metaverse Application MVA as shown in Fig. 1 allows users to load and decompose complex assets into smaller components within a virtual environment. The Metaverse Application MVA provides a platform for visualizing and interacting with the digital representations of industrial sites.

An Asset Representation Loader, not detailed in the drawing, is a software component that loads a point cloud format 3D scan of a room into the metaverse. The Asset Representation Loader enables the system to incorporate real-world spatial data into the virtual environment, providing an accurate representation of the physical industrial site.

A Large Digital Twin Model LDTM is capable of identifying digital twins based on physical characteristics and interconnection of components. The Large Digital Twin Model LDTM analyzes the spatial data of the industrial components and deduces functional data of industrial components through analyzing the functional representation of interconnected components to find and generate appropriate digital representations. The Large Digital Twin Model LDTM is also able to return an exact match of shape and corresponding digital twin or suggest properties and simulation behaviors for newly derived digital twins.

Digital Twin Data Connectors are interfaces designed to connect digital twins of machines to the Metaverse Application MVA. The Digital Twin Data Connectors facilitate the integration of existing digital twins with newly generated ones, ensuring seamless data flow and interaction within the virtual environment.

The Data Collection Tool DCT exposes interfaces to the Metaverse Application MVA and users to send data regarding digital twins and factory lines to a knowledge base. The Data Collection Tool DCT enables the system to gather and store relevant information about industrial components and their digital representations.

These components work in concert to create a comprehensive digital representation of industrial sites, including both modern and legacy equipment. By automating the process of generating and integrating digital twins, the system reduces manual effort and accelerates the digitalization of industrial facilities.

The process for creating a digital twin of an industrial site with components having attributed digital twins and components without presently attributed digital twins comprises four main steps.

The first step involves loading assets in a metaverse application. This step allows for the virtual representation of the industrial site within the metaverse environment.

The second step entails connecting existing digital twins with the metaverse application. This step integrates the digital representations of components that already have attributed digital twins into the virtual environment.

The third step focuses on creating missing digital twins for components that do not have existing digital representations. This step utilizes a generative Al model to suggest spatial designs and data functionalities for these components.

The fourth and final step involves connecting the newly created missing digital twins with the overall metaverse application. This step ensures that all components, both those with pre-existing digital twins and those with newly generated ones, are integrated into a comprehensive digital representation of the industrial site.

This process enables the creation of a complete digital twin of the industrial site, incorporating both modern and legacy equipment, and facilitating improved monitoring, analysis, and optimization of industrial processes.

The process of creating a digital twin of an industrial site as described with the help of Fig. 1 thus begins with loading assets into the Metaverse Application MVA and connecting existing digital twins to the virtual representation.

To initiate the asset loading process, a user, in the depicted embodiment a factory operator FO, starts the Metaverse Application MVA. The factory operator FO then employs a file explorer within the Metaverse Application MVA to load a scan of the factory for incorporation into the virtual scene to the Data Collection Tool DCT with step 1. Prior to sending the scan to the Data Collection Tool DCT, the Factory Operator FO ensures that machines MWDT without known Digital Twins are marked in the can. The scan may be in various formats, such as a point cloud representation of the factory floor.

Once the factory scan is loaded, the user proceeds to connect existing digital twins with the virtual representation. The user selects individual machines within the loaded scan. For each selected machine that has an existing digital twin, the user chooses a corresponding model, such as a CAD (Computer-Aided Design) model, and places it in the appropriate position within the virtual scene.

During this process, a known Siemens Machine Digital Twin SMDT of a Siemens Machine SM may be plugged into the metaverse with step 2 to represent a Siemens machine SMDT present in the metaverse of the factory. Similarly, an Another Machine Digital Twin AMDT of Another Machine AM may be plugged into the metaverse with step 4 to represent another machine AM from a different manufacturer in the metaverse. These digital twins, namely the Siemens Machine digital Twin SMDT and Another Machine Digital Twin AMDT, contain detailed information about their own geometrical spatial design, about their respective specifications and functionalities including data functionalities and data interfaces.

Additionally, with steps 3 and 5, also real time data from the machines, such as the Siemens Machine SM and Another Machine AM are provided to the Data Collection Tool DCT.

After placing the geometrical spatial design, such as CAD models, in the scene, the Factory Operator FO configures the API (Application Programming Interface) endpoints for each digital twin. This configuration establishes the connection between the virtual representation and the real-time data from the physical machines.

The Factory Operator FO repeats this process for all individual machines in the factory for which digital twins exist. This iterative approach ensures that each machine with an available digital twin is accurately represented and connected within the virtual environment.

Throughout this process, the Data Collection Tool DCT may be utilized to gather and store relevant information about the digital twins and their connections. This information can be sent to a knowledge base KB, which can be accessed by the Large Digital Twin Model LDTM for future reference and analysis.

By completing these steps, the Metaverse Application MVA creates a comprehensive virtual representation of the factory, incorporating both the physical layout from the scan and the functional representations provided by the connected digital twins.

However, as described above, there are still machines within the factory floor, that in this stage of conducting the method, are not attributable with known digital twins.

The process of creating digital twins for machines without existing digital spatial and functional representations involves several steps and components as described below more specifically:
The Factory Operator FO initiates the process by uploading pictures and scans of the factory floor, annotating machines that lack digital twins. These images and annotations are sent to the Data Collection Tool DCT with the previously described step 1.

An overall information knowledge graph of the factory floor is created to represent the relationships and data flow between components. In this knowledge graph, components with attributed digital twins are represented by nodes, while the data functionalities of these attributed digital twins are represented by edges. For machines without existing digital twins, such as the Machine Without Digital Twin MWDT, the Data Collection Tool DCT creates nodes in the knowledge graph with step 9 labeled as "unknown" with no connecting edges.

The Knowledge Base KB receives the uploaded images and factory floor description from the Data Collection Tool DCT with the missing digital twins with step 8. The Knowledge Base KB then attempts to find matching models based on the pictures and scans of the factory floor with step 10. This process involves comparing shape measurements of components to a database of digital twin attributions. For components with matching shape measurements, digital twins are attributed. However, for components without matching shape measurements, no digital twin is attributed at this stage.

The Large Digital Twin Model LDTM, which serves as a generative Al model, receives the initial suggestions and knowledge graph from the Knowledge Base KB with step 11. The Large Digital Twin Model LDTM compares the missing information with its existing trained model and factory lines. Based on this comparison, the Large Digital Twin Model LDTM suggests a spatial design for the component without an attributed digital twin, using the shape measurement of the component as a reference and sends the suggestion to the Metaverse Application MVA.

In addition to suggesting a spatial design, the Large Digital Twin Model LDTM generates with step 14 a data functionality for the component without an attributed digital twin. This generation is based on the data functionality of components with attributed digital twins, such as a Siemens Machine Digital Twin SMDT or an Another Machine Digital Twin AMDT that is obtained from Knowledge Base KB with step 13. The Large Digital Twin Model LDTM also considers the suggested spatial design when generating the data functionality, ensuring a comprehensive representation of the component.

The generated digital twin includes data interfaces that correspond to the derived data functionality. These interfaces enable the digital twin to interact with other components in the virtual environment and facilitate data exchange within the Metaverse Application MVA.

By utilizing this process, the system can create digital twins for legacy equipment or machines without existing digital representations, integrating them seamlessly with the digital twins of modern equipment. This approach allows for a comprehensive digital representation of the entire industrial site, including both a Siemens Machine SM and an Another Machine AM, regardless of their age or the availability of pre-existing digital twins.

The digital twins of the Machines with originally missing digital twins are then sent back to the Metaverse Application MVA with step 15. The Factory Operator FO can access the Metaverse Application MVA with step 16 to verify the generated digital twins. The Factory Operator FO can review the generated digital twins within the Metaverse Application MVA to ensure accuracy and completeness. This verification process allows the Factory Operator FO to examine the design, visual representation, Functional Mockup Interface FMI, and Application Programming Interfaces APIs of each machine, including those without previously attributed digital twins. The feedback provided by the Factory Operator FO may include corrections to the spatial design, adjustments to the data functionality, or modifications to the proposed interfaces. By incorporating this feedback, the Large Digital Twin Model LDTM can learn from the differences between the generated digital twin and the actual machine characteristics, enhancing accuracy for future digital twin creation. Based on the feedback of the Factory Operator FO, the Metaverse Application MVA sends with step 17 deviations from the originally attributed digital twins and the freshly generated digital twins as suggested by the Factory Operator FO back to the knowledge base KB. The Knowledge Base KB uses this feedback also for training the Large Digital Twin Model LDTM with step 18. That way, the Large Digital Twin Model LDTM evolves over time with step 19.

With the generation of digital twins for components with originally unknown digital twins a full digital representation of the industrial site is completed and presented to the Factory Operator within user interfaces of the Metaverse Application MVA.

During the verification process, the Factory Operator FO compares the generated digital twin with the actual physical components and their known functionalities. The Factory Operator FO can confirm whether the provided digital twin matches expectations for each machine, including both the Siemens Machine SM and Another Machine AM.

In cases where discrepancies or inaccuracies are identified, the Factory Operator FO can provide feedback to improve the digital twin representation. The Factory Operator FO sends this feedback to the Knowledge Base KB and the Large Digital Twin Model LDTM through the Data Collection Tool DCT. This feedback mechanism enables continuous improvement and refinement of the digital twin generation process.

Additionally, the Factory Operator FO can indicate specific components within the industrial site that do not have presently attributed digital twins. This indication allows the system to focus on generating digital twins for these identified components, ensuring a comprehensive digital representation of the entire industrial site.

Through this iterative process of verification and feedback, the digital twin of the industrial site becomes increasingly accurate and representative of the physical environment. The continuous learning and improvement of the Large Digital Twin Model LDTM based on user feedback contribute to the overall effectiveness of the digital twin creation process for brownfield factories.

The created digital twin of the industrial site is integrated into the Knowledge Base KB, enhancing the system's ability to generate and refine digital representations for future projects. This integration process involves storing the spatial designs, data functionalities, and interface specifications of both existing and newly created digital twins.

The Large Digital Twin Model LDTM continuously evolves through a process of learning and refinement. As new digital twins are created and verified, the Large Digital Twin Model LDTM incorporates this information to improve accuracy and efficiency in future digital twin generation tasks.

The Metaverse Application MVA serves as the central platform for visualizing and interacting with the integrated digital twins. The Metaverse Application MVA allows users to access and manipulate the digital representations of both the Siemens Machine SM and Another Machine AM within the virtual environment.

The Data Collection Tool DCT plays a crucial role in the continuous improvement process. The Data Collection Tool DCT gathers feedback from the Factory Operator FO during the verification stage and transmits this information to the Knowledge Base KB and the Large Digital Twin Model LDTM. This feedback loop enables the system to refine its digital twin generation capabilities over time.

As the system processes more industrial sites and receives additional feedback, the Large Digital Twin Model LDTM becomes increasingly adept at generating accurate digital twins for a wide range of components, including those without pre-existing digital representations. This continuous learning process enhances the system's ability to handle diverse industrial environments and legacy equipment.

The integration of newly created digital twins with existing ones within the Knowledge Base KB creates a comprehensive repository of industrial component representations. This repository serves as a valuable resource for future digital twin generation tasks, allowing the system to draw upon a growing database of component designs and functionalities.

By continuously expanding and refining the Knowledge Base KB, the system improves its ability to suggest appropriate spatial designs and data functionalities for components without attributed digital twins. This iterative process of integration and improvement contributes to the overall effectiveness and efficiency of the digital twin creation system for brownfield factories.

## Claims

1. Method for creating a digital twin of an industrial site with components with attributed digital twins and at least one component without a presently attributed digital twin, wherein for the at least one component without attributed digital twin a generative Al model suggests a spatial design of the component based on a shape measurement of the component and wherein a data functionality of the at least one component without attributed digital twin is generated by the generative Al based on a data functionality of the components with attributed digital twins (FO, MVA, DCT, KB, LDTM).

2. Method according to the preceding claim, which is computer-implemented (MVA).

3. Method according to one of the preceding claims, wherein a digital twin of a component or site is a digital spatial and data functional representation of the component or site, respectively (SMDT, AMDT).

4. Method according to claim 1, wherein a data functionality of the at least without an attributed digital twin is generated based additionally on the suggested spatial design of the component (LDTM).

5. Method according to one of the preceding claims, wherein a component comprises at least one device, particularly a manufacturing machine and/or logistic machine (SM, AM).

6. Method according to one of the preceding claims, wherein a component comprises an arrangement of devices, particularly manufacturing machines and/or logistic machines (SM, AM).

7. Method according to one of the preceding claims, wherein the generative Al model is a generative large digital twin model (LDTM).

8. Method according to one of the preceding claims, wherein the digital twin includes data interfaces, particularly corresponding to the data functionality (SMDT, AMDT),

9. Method according to one of the preceding claims, wherein the industrial site is modelled with a knowledge graph, in which components with attributed digital twins are represented by nodes and data functionalities of the attributed digital twins are represented by edges (KB).

10. Method according to one of the preceding claims, wherein the digital twin of the industrial site is presented to a user for verification (FO).

11. Method according to one of the preceding claims, wherein the digital twins without a presently attributed digital twin can be indicated by user (FO).

12. Method according to one of the preceding claims, wherein the created digital twin is included into a knowledge base (KB).

13. Method for creating a digital twin of an industrial site with components, wherein a shape measurement of one or more components is compared to a knowledge base of attributions of digital twins of components to shapes of components and wherein for components with matching shape measurements digital twins are attributed and wherein for one or more components without matching shape measurement no digital twin is attributed, and wherein the digital twin of the industrial site is created with a method according to one of the previous claims (FO, MVA, DCT, KB, LDTM).
